# EUROPEAN PATENT SPECIFICATION

(11) **EP 1 223 682 B1**
(45) Date of publication and mention of the grant of the patent: **24.09.2003**
(21) Application number: 00610140.6
(22) Date of filing: 22.12.2000
(51) Int. Cl.: H04B 1/38

(54) **An electronic device for a mobile radio station**
Elektronisches Gerät für eine mobile Radiostation
Dipositif électronique pour une station radio mobile

(43) Date of publication of application: 17.07.2002
(73) Proprietor: Telefonaktiebolaget L M Ericsson (Publ), 126 25 Stockholm (SE)
(72) Inventor: Barvesten, Mats, 222 29 Lund (SE); Ahlström, Anders, 222 23 Lund (SE)
(74) Representative: Boesen, Johnny Peder

(56) References cited:
- EP-A- 0 663 749
- EP-A- 0 789 474
- DE-U- 29 911 295
- US-A- 5 610 979

## Description

### Technical field

The invention relates to an electronic device that is connectable to a mobile radio station, such as a mobile telephone, said device comprising a housing that is mechanically as well as electrically connectable to the mobile radio station in a releasable manner and said device being provided with electronic communication components.

### Related prior art

Such electronic devices are known in a number of varieties. For instance, EP-A1-0 663 749 discloses a hands-free equipment for a mobile telephone comprising an extra loudspeaker and microphone that is connectable to the mobile telephone via a connector plug. This equipment is intended for use in a car and also includes a charger plug that can be plugged into a cigarette lighter charger socket. The extra loudspeaker may optionally be integral with the charger plug or with the connector plug, and the external microphone is connected to either of these via a cord. The device is not provided with any holding means for the mobile telephone itself, hence a separate holder must be provided or it can simply be put on a surface, e.g. the passenger seat. Since the equipment must be connected to the cigarette lighter charger socket of a car, its use is limited to the interior of a car.

Portable hands-free sets are also available. A portable hands-free set typically comprises a plug to be plugged into a standard socket of a mobile telephone, said plug being provided with a cord having a microphone provided with a clip attach to it at a certain distance from the plug and an earphone at its distant end. A person using this type of hands-free set carries the mobile telephone in a pocket or by means of some kind of clip provided at the rear side of the mobile telephone, and the microphone is attached to the clothing near the mouth by means of a clip. This type of hands-free set makes it possible for the user to do other things with his hands than to hold the mobile telephone while still talking on the mobile telephone. The known portable hands-free sets of this type allow only one person to communicate through the mobile telephone at a time.

DE-U1-299 11 295 discloses an accessory for a mobile telephone which is not electrically connected to the mobile telephone but only mechanically connected thereto. The accessory comprises fastening means for attaching the accessory to a mobile telephone and a loudspeaker that amplifies the sound from the speaker of the mobile telephone so that optionally other persons can listen in on the conversation. The accessory is not provided with any means for carrying the combined mobile telephone/accessory, hence it must be held by the hand or supported otherwise.

### Object of the invention

Many people - especially young people - often gather in groups and perform joint activities, professionally or privately. Communication through mobile radio stations, such as mobile telephones, has become increasingly popular and a need for communicating with other people when gathered in groups has appeared.

The hands-free equipment disclosed in EP-A1-0 663 749 must be connected to the cigarette lighter charger socket of a car and its use is therefore limited to the interior of a car, although it is possible for more people to participate in the telephone conversation at the same time. Another disadvantage of this equipment is that the mobile telephone must be held by the hand or by a separate holder for that particular mobile telephone.

With the accessory disclosed in DE-U1-299 11 295 it is possible for more than one person to listen to the telephone conversation and it is not limited for use in a particular environment. However, the accessory is not provided with any means for carrying the combined mobile telephone/accessory, hence it must be held by the hand or supported otherwise. Moreover, since the accessory is not connected electrically to the mobile telephone, it is provided with its own batteries and electronics for amplifying the sound generated by the mobile telephone. This adds considerably to the weight of the accessory which makes it unhandy.

It is therefore an object of the invention to provide an electronic device that is connectable to a mobile radio station, such as a mobile telephone, which device should be an easy-to-carry hands-free device whose use is not limited to any particular environment and which makes it possible to communicate via the mobile radio station in a novel way.

### Summary of the invention

The object of the invention is achieved by providing the electronic device mentioned in the opening paragraph with a neck-strap to be worn around the neck of a user of the mobile radio station and with connecting means adapted for firm connection between the device and the mobile radio station.

The electronic device according to the invention can therefore be worn around the neck of the user with the mobile radio station, such as a mobile telephone, firmly connected to the device. The mobile radio station then typically rests on the chest of the user and he has his hands free for doing other things. Furthermore, in this position other persons gathered around the user are able to communicate through the mobile radio station via the electronic communication components provided in the device according to the invention.

In a preferred embodiment the electronics comprise a loudspeaker that is integral with the housing of the device, which loudspeaker is adapted to emit sound from the mobile radio station in an audible manner. By incorporating a loudspeaker in the device it is made possible for other persons standing near the user to listen in on the conversation.

A pushbutton for switching the loudspeaker on and off may be provided in order to optionally let other persons listen to the conversation, and in order not to be forced to put the mobile radio station to the ear when the loudspeaker is turned off the electronic device is provided with at least one earphone.

When the electronic device is provided with an earphone, the pushbutton preferably switches between the loudspeaker and the earphone. Thereby the user can easily switch from the loudspeaker where all persons standing nearby can listen in on the conversation to the earphone in order to have a more private conversation.

The electronic device is preferably also provided with a microphone which, in the preferred embodiment, is integral with a housing arranged on the neck-strap at a distance from the housing of the device and a cord is incorporated in the neck strap between the housing of the device and the microphone. Since the microphone is arranged at the neck-strap it does not need a clip or the like which is generally the case for the known hands-free sets.

In the preferred embodiment a cord provided with at least one earphone extends from the housing with the built-in microphone. It is thereby avoided that a cord must be provided all the way from the electronic device to the earphone.

In addition to or instead of a loudspeaker and a microphone the electronic device may comprise a camera for recording still and/or moving images whereby the communication possibilities are increased considerably.

Furthermore, the electronic device may comprise electronic components for wireless communication with other electronic devices independently of the mobile radio station. This makes it possible to use the electronic device and the mobile radio station in a very flexible manner not known hitherto.

Preferably the electronic device is connectable to an interface connector provided on the mobile radio station. Most mobile radio stations are provided with some kind of standard interface connector which will make it possible to use the electronic device according to the invention with different mobile radio station models, at least from the same manufacturer.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a first embodiment of an electronic device according to the invention,
Fig. 2 shows the electronic device shown in Fig. 1 connected to a mobile telephone and worn around the neck of a user,
Fig. 3 shows a second embodiment of an electronic device according to the invention, and
Fig. 4 shows a third embodiment of an electronic device according to the invention.

### Detailed description of an embodiment of the invention

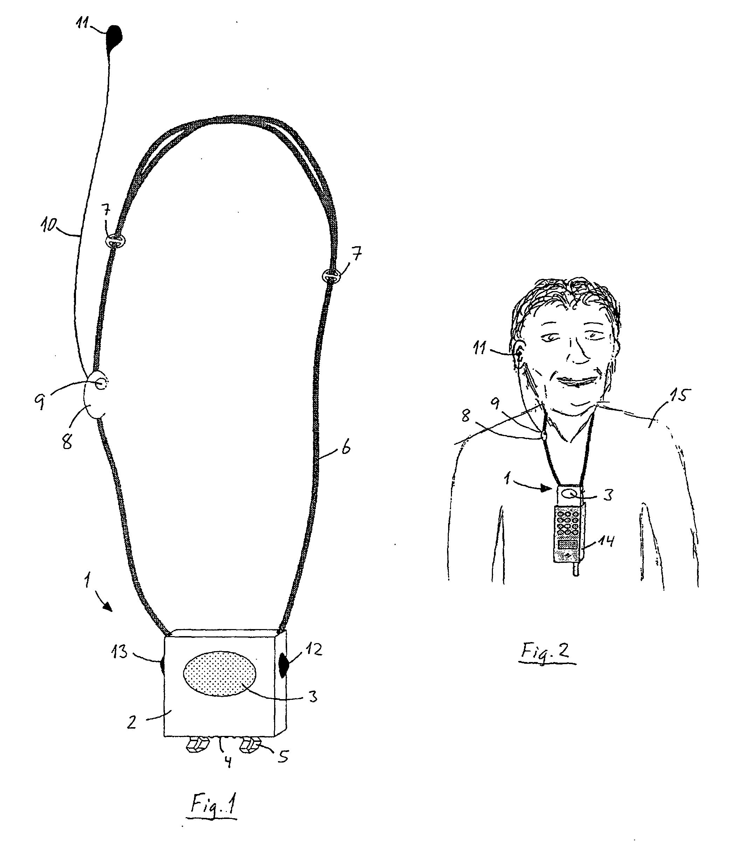

Fig. 1 shows a first embodiment of an electronic device 1 according to the invention. The device 1 comprises a housing 2 which has an opening featuring a loudspeaker 3.

The electronic device 1 is further provided with plug means for connecting the device 1 to a standard interface connector provided in a mobile radio station, such as a mobile telephone. In the present embodiment the plug means comprises terminal strips 4 and hooks 5, the terminal strips 4 being intended for electrically connecting the electronic device 1 to the mobile radio station and the hooks 5 being intended for mechanically connecting the electronic device 1 to the mobile radio station. Of course, the interface connector of the mobile radio station must be provided with plug means that are complementary to the plug means of the electronic device 1, i.e. terminal strips that are complementary with the terminal strips 4 of the electronic device 1 and openings that are engageable with the hooks 5. In the shown embodiment each hook 5 is designed as a closed-loop band that flexes laterally when it is plugged into the opening provided in the mobile radio station. The hook therefore snaps into the opening and provides a firm mechanical connection between the electronic device 1 and the mobile radio station.

The electronic device 1 is further provided with a neck strap 6 whose length may be adjusted by means of two adjustment buckles 7. A small housing 8 is provided at a suitable position of the neck strap 6, said housing comprising a built-in microphone 9 and being provided with a cord 10 having an earphone 11 at its distal end. A holder for the earphone 11 may be provided in the small housing 8 for holding the earphone when it is not in use (not shown). The small housing 8 is electrically connected to the housing 2 of the electronic device 1 via a cord incorporated in the neck strap 6.

Finally, the electronic device 1 is provided with pushbuttons 12,13 for operating the electronic device 1 when it is connected to a mobile radio station as it will be described in the following with reference to Fig. 2.

Fig. 2 shows the electronic device 1 according to the invention connected to a mobile telephone 14 and worn around the neck of a user 15. The mobile telephone 1 is provided with an interface connector at the bottom end - which is the case with most mobile telephones - which means that the mobile telephone will be in an inverted position, i.e. hanging upside down as shown in Fig. 2, when it is connected to the electronic device 1 and worn around the neck of the user 15. This requires a durable connection between the mobile telephone 14 and the electronic device 1 in order to prevent the mobile telephone 14 from being accidentally separated from the electronic device 1.

The small housing 8 with a built-in microphone 9 is positioned at the upper part of the chest of the user 15 at a suitable position for picking up speech of the user 15 and of other persons positioned nearby. The earphone 11 is plugged into the ear of the user 15.

The electronic device 1 according to the invention serves various purposes. For instance, it can be used as an ordinary hands-free set where the user 15 is able to make telephone conversations while having his hands free for doing other things. In this mode the electronic device 1 picks up speech from the user 15 by the microphone 9 and the user 15 listens in by the earphone 11.

The electronics of the device according to the invention communicate with the electronics of the mobile telephone in such a way that when a call arrives the user 15 simply has to press the pushbutton 12 in order to answer the call. This automatically puts the electronic device 1 in "hands-free mode" whenever the device is connected to the mobile telephone 14.

The electronic device 1 can be switched from "hands-free mode" to what may be called "group mode" where the microphone 9 picks up speech from the user 15 as well as from other persons standing nearby and where these other persons can listen in on the telephone conversation by means of the loudspeaker 3. Switching between the hands-free mode and the group mode is achieved by pressing the pushbutton 13.

When the electronic device 1 is set to group mode other persons standing nearby the user 15 can participate in the telephone conversation like a kind of conference call using a single mobile telephone 14 at one or both ends.

When the electronic device 1 is in group mode the user 15 does not need to use the earphone 11 and he may optionally remove it from the ear and possibly place it in a holder therefor provided in the small housing 8.

The inverted position of the mobile telephone 14 seems at a first glance to be quite extraordinary. However, when the user 15 wishes to dial a number or read a message on the display of the mobile telephone 14 he simply grips the mobile telephone 14 and lifts it from its hanging position shown in Fig. 2 whereby the mobile telephone 14 immediately assumes a proper position for dialling a number or reading the display.

The electronic device 1 may be provided with its own power source, such as one or more batteries. Preferably, however, the electronic device 1 is not provided batteries, but is powered by the battery of the mobile telephone 14 whenever the electronic device 1 is connected thereto. This exclusion of a battery in the electronic device 1 makes it possible to minimize the size as well as the weight of the electronic device 1.

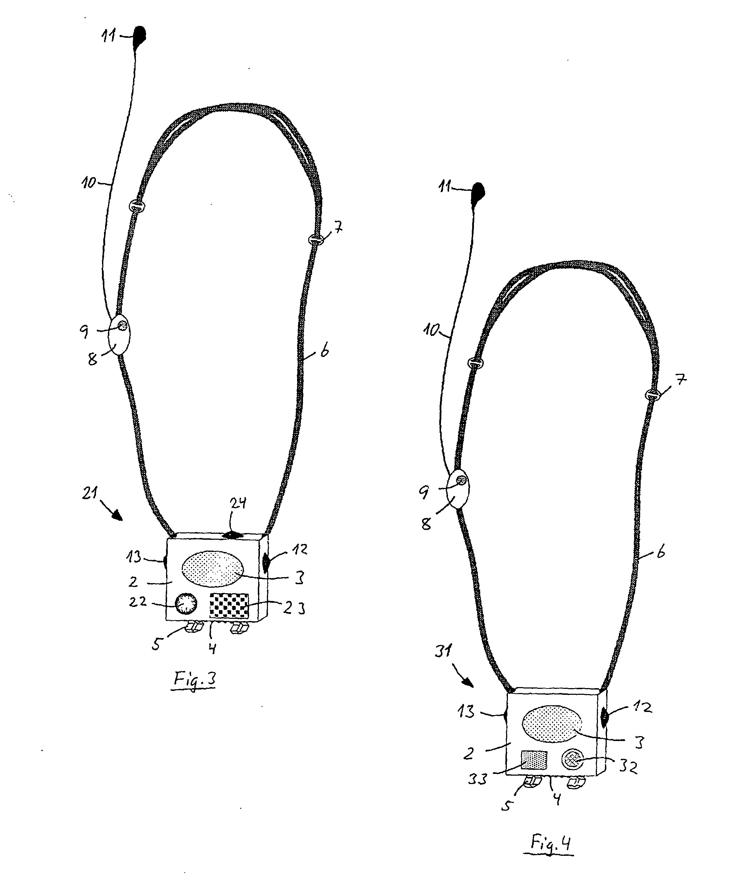

Fig. 3 shows a second embodiment of an electronic device 21 according to the invention. The electronic device 21 comprises a number of elements that correspond to same elements of the electronic device 1 shown in Figs 1 and 2 and these elements will be referred to by the same reference numerals. The common elements are the housing 2, the opening featuring a loudspeaker 3, the terminal strips 4 and connecting hooks 5, the neck strap 6 with adjustment buckles 7, the small housing 8 with a built-in microphone 9 and a cord 10 for an earphone 11, and pushbuttons 12,13. Additionally, the electronic device 21 comprises a digital camera 22 for recording still and/or moving images that can be transmitted to another appliance via a mobile telephone and a small LCD 23 for displaying still and/or moving images received from another appliance. Only the lens of the digital camera 22 is shown, but it may also comprise a viewfinder or another display for showing the image that is recorded by the digital camera 22. A third pushbutton 24 is also provided for operating the digital camera 22.

The LCD 23 and other possible displays may be dispensed with in the electronic device 21 if it is possible to use a display of the mobile radio station for showing the above-mentioned images.

Fig. 4 shows a third embodiment of an electronic device 31 according to the invention. This device is equipped with the same common elements 2-13 as the electronic devices 1,21 shown in Figs 1-3 and they will not be described again. However, the electronic device 31 is also provided with electronic components for wireless communication with other electronic equipment independently of the mobile radio station.

These electronic components preferably comprise a transmitter 32 and a receiver 33 for use in a short-range radio-link that operates independently of the telecommunication of the mobile radio station. With such components incorporated in the electronic device 31 it is possible to communicate with other electronic equipment, e.g. other electronic devices 31, operating in accordance with a common protocol defining the provisions of the short-range radio-link. In this manner it is possible for more users of electronic devices 31 to communicate with each other within a short range without operating the mobile radio station as such.

The invention has been described with reference to three embodiments shown in the drawings. However, the electronic device according to the invention may be varied in a number of ways without departing from the general idea of the invention. For instance, other communication means than the ones shown and described may be applied, e.g. an infrared transmitter and receiver or other light-emitting elements. Likewise, the earphone and/or microphone at the neck strap may be omitted since communication can be obtained otherwise, e.g. by means of a built-in microphone and loudspeaker provided in the housing of the electronic device.

Also, the connecting means for connecting the electronic device with the mobile radio station may be varied in accordance with the type of interface connector provided in the relevant mobile radio station.

## Claims

1. An electronic device (1;21;31) that is connectable to a mobile radio station, such as a mobile telephone (14), said device comprising a housing (2) that is mechanically as well as electrically connectable to the mobile radio station in a releasable manner and said device being provided with electronic communication components, **characterised in that** the device comprises a neck-strap (6) to be worn around the neck of a user (15) of the mobile radio station and connecting means (4,5) adapted to provide a mechanically and electrically firm connection between the device and the mobile radio station.

2. An electronic device according to claim 1, **characterised in that** the device comprises a loudspeaker (3) that is integral with the housing (2) of the device, said loudspeaker (3) being adapted to emit sound from the mobile radio station in an audible manner.

3. An electronic device according to claim 2, **characterised in that** the device is provided with a pushbutton (13) for switching the loudspeaker (3) on and off.

4. An electronic device according to any one of claims 1-3, **characterised in that** the device is provided with at least one earphone (11).

5. An electronic device according to claim 4, **characterised in that** the device is provided with a pushbutton (13) for switching between the loudspeaker (3) and the earphone (11).

6. An electronic device according to any one of claims 1-5, **characterised in that** the device is provided with a microphone (9).

7. An electronic device according to claim 6, **characterised in that** the microphone (9) is integral with a housing (8) arranged on the neck-strap (6) at a distance from the housing (2) of the device; and that a cord is incorporated in the neck strap (6) between the housing (2) of the device and the microphone (9).

8. An electronic device according to claim 7, **characterised in that** a cord (10) provided with at least one earphone (11) extends from the housing (8) with the built-in microphone (9).

9. An electronic device according to any one of claims 1-8, **characterised in that** the device comprises a camera (22) for recording still and/or moving images.

10. An electronic device according to any one of claims 1-9, **characterised in that** the device comprises electronic components (32,33) for wireless communication with other electronic devices independently of the mobile radio station.

11. An electronic device according to any one of claims 1-10, **characterised in that** the device is connectable to an interface connector provided on the mobile radio station.

## Patentansprüche

1. Elektronisches Gerät (1; 21; 31), welches mit einer mobilen Funkstation verbindbar ist, wie mit einem mobilen Telefon (14), wobei das besagte Gerät ein Gehäuse (2) umfasst, welches sowohl in mechanischer als auch in elektrischer Weise mit der mobilen Funkstation in lösbarer Weise verbindbar ist, und wobei das besagte Gerät mit elektronischen Kommunikationskomponenten versehen ist, **dadurch gekennzeichnet, dass** das Gerät einen Tragriemen (6), welcher um den Hals eines Benutzers (15) der mobilen Funkstation zu tragen ist, und Verbindungsmittel (4, 5) umfasst, die geeignet sind, eine mechanisch und elektrisch feste Verbindung zwischen dem Gerät und der mobilen Funkstation zu bilden.

2. Elektronisches Gerät nach Anspruch 1, **dadurch gekennzeichnet, dass** das Gerät einen Lautsprecher (3) umfasst, der einstückig mit dem Gehäuse (2) des Gerätes ausgestaltet ist, wobei der besagte Lautsprecher (3) eingerichtet ist, aus der mobilen Funkstation stammende Geräusche in hörbarer Weise abzugeben.

3. Elektronisches Gerät nach Anspruch 2, **dadurch gekennzeichnet, dass** das Gerät mit einem Bedienknopf (13) versehen ist, um den Lautsprecher (3) an- und auszuschalten.

4. Elektronisches Gerät nach einem der Ansprüche 1 bis 3, **dadurch gekennzeichnet, dass** das Gerät mit mindestens einem Ohrhörer (11) versehen ist.

5. Elektronisches Gerät nach Anspruch 4, **dadurch gekennzeichnet, dass** das Gerät mit einem Bedienknopf (13) versehen ist, um zwischen dem Lautsprecher (3) und dem Ohrhörer (11) umzuschalten.

6. Elektronisches Gerät nach einem der Ansprüche 1 bis 5, **dadurch gekennzeichnet, dass** das Gerät mit einem Mikrofon (9) versehen ist.

7. Elektronisches Gerät nach Anspruch 6, **dadurch gekennzeichnet, dass** das Mikrofon (9) einstückig mit einem Gehäuse (8) angeordnet ist, welches auf dem Tragriemen (6) in einem Abstand vom Gehäuse (2) des Gerätes angeordnet ist, und dass ein Kabel in dem Tragriemen (6) zwischen dem Gehäuse (2) des Gerätes und dem Mikrofon (9) vorgesehen ist.

8. Elektronisches Gerät nach Anspruch 7, **dadurch gekennzeichnet, dass** ein Kabel (10), das mit mindestens einem Ohrhörer (11) versehen ist, sich von dem Gehäuse (8) mit dem eingebauten Mikrofon (9) weg erstreckt.

9. Elektronisches Gerät nach einem der Ansprüche 1 bis 8, **dadurch gekennzeichnet, dass** das Gerät eine Kamera (22) zum Aufnehmen von stehenden und/oder bewegten Bildern umfasst.

10. Elektronisches Gerät nach einem der Ansprüche 1 bis 9, **dadurch gekennzeichnet, dass** das Gerät elektronische Komponenten (32, 33) für die drahtlose Kommunikation mit anderen elektronischen Geräten unabhängig von der mobilen Funkstation umfasst.

11. Elektronisches Gerät nach einem der Ansprüche 1 bis 10, **dadurch gekennzeichnet, dass** das Gerät mit einem Schnittstellenverbinder verbunden werden kann, der auf der mobilen Funkstation vorgesehen ist.

## Revendications

1. Dispositif électronique (1; 21; 31), qui peut être connecté avec une station radio mobile, comme un téléphone mobile (14), où ledit dispositif comprend un boîtier (2), qui peut être connecté avec la station radio mobile d'une manière amovible aussi bien mécaniquement qu'électriquement, et où ledit dispositif est prévu avec des composantes de communication électroniques, **caractérisé en ce que** le dispositif comprend une bandoulière (6), laquelle est à porter autour du cou d'un utilisateur (15) de la station radio mobile, et des moyens de connexion (4, 5), étant adaptés pour oeuvrer une connexion mécaniquement et électriquement stable entre le dispositif et la station radio mobile.

2. Dispositif électronique suivant la revendication 1, **caractérisé en ce que** le dispositif comprend un haut-parleur (3), qui fait partie intégrale avec le boîtier (2) du dispositif, où ledit haut-parleur (3) est adapté pour émettre des sons provenant de la station radio mobile d'une manière audible.

3. Dispositif électronique suivant la revendication 2, **caractérisé en ce que** le dispositif comprend un bouton de commande (13) pour allumer et éteindre le haut-parleur (3).

4. Dispositif électronique suivant l'une des revendications 1 à 3, **caractérisé en ce que** le dispositif comprend au moins un écouteur (11).

5. Dispositif électronique suivant la revendication 4, **caractérisé en ce que** le dispositif comprend un bouton de commande (13) pour commuter entre le haut-parleur (3) et l'écouteur (11).

6. Dispositif électronique suivant l'une des revendications 1 à 5, **caractérisé en ce que** le dispositif comprend un microphone (9).

7. Dispositif électronique suivant la revendication 6, **caractérisé en ce que** le microphone (9) fait partie intégrale avec un boîtier (8), qui est positionné sur la bandoulière (6) dans une distance du boîtier (2) du dispositif, et **en ce qu'**un câble est prévu dans la bandoulière (6) entre le boîtier (2) du dispositif et le microphone (9).

8. Dispositif électronique suivant la revendication 7, **caractérisé en ce que** le câble (10) comprenant au moins un écouteur (11) s'entend du boîtier (8) avec le microphone (9) incorporé.

9. Dispositif électronique suivant l'une des revendications 1 à 8, **caractérisé en ce que** le dispositif comprend un appareil photo et/ou une camera (22) pour prendre des photographies respectivement un film.

10. Dispositif électronique suivant l'une des revendications 1 à 9, **caractérisé en ce que** le dispositif comprend des composantes électroniques (32, 33) pour la communication sans fil avec d'autres dispositifs électroniques indépendamment de la station radio mobile.

11. Dispositif électronique suivant l'une des revendications 1 à 10, **caractérisé en ce que** le dispositif peut être connecté avec un connecteur interface étant prévu sur la station radio mobile.
